# EUROPÄISCHE PATENTANMELDUNG

(11) **EP 1 150 544 A2**
(43) Veröffentlichungstag der Anmeldung: **31.10.2001**
(21) Anmeldenummer: 01110339.7
(22) Anmeldetag: 26.04.2001
(51) Int. Cl.: H04R 3/00

(54) **Verfahren zur Hochfrequenz-Signalübertragung**

(30) Priorität: 28.04.2000 DE 10020857
(71) Anmelder: KONIG, Florian Meinhard, D-82110 Germering (DE)
(72) Erfinder: KONIG, Florian Meinhard, D-82110 Germering (DE)
(74) Vertreter: Englaender, Klaus, Dipl.-Ing.

(57) **Zusammenfassung**

Die Erfindung betrifft ein Verfahren zur Hochfrequenz-Signalübertragung zwischen einem Sender und einem Empfänger. Erfindungsgemäß ist vorgesehen, dass mit dem HF-Nutzsendesignal ein Signal zur Erzeugung eines natürlichen elektromagnetischen Wechselfelds verknüpft wird, und dass aus den verknüpften Signalen im Empfänger das HF-Nutzsendesignal extrahiert wird.

## Beschreibung

Die Erfindung betrifft ein Verfahren zur Hochfrequenz-Signalübertragung zwischen einem Sender und einem Empfänger.

Insbesondere liegt die vorliegende Erfindung auf dem Gebiet der digitalen Signalübertragung, wie beispielsweise der Signalübertragung im Zusammenhang mit Mobiltelefonen bzw. sogenannten Handys, die im GSM- und zukünftig im UMTS-Datenübertragungsformat arbeiten.

Problematisch an künstlich erzeugten elektromagnetischen Feldern zur Datenübertragung bis in den Giga-Hertz-Bereich mit typischerweise einer Pulsung der Felder im Bereich von 100 bzw. mehreren 100 Hz bei Handys und schnurlosen Telefonen ist der damit verbundene Elektrostress, der sich auf biologische Zellen ungünstig auswirkt. Insbesondere bei schnurlosen Telefonen und Handys ist aufgrund der hohen Sendeleistung dieser Geräte und der Nutzung des jeweiligen Handgeräts am Ohr eines Nutzers eine deutliche biologische Stresseinwirkung auf Zellen des Nutzers nicht vermeidbar. In wissenschaftlichen Publikationen und unter anderem im Magazin 2000 plus Nr. 144 (12-1999, S. 74) wurde von Lebrecht von Klitzing ausgeführt, dass die hohe Dynamik von über 60 dB zwischen Impulspaketpausen der HF-Signalübertragung Auslöser für heftige Zellreizungen/Irritationen bei einer typischen Zellresonanz von bis 400 Hz ist. Ferner ist in diesem Artikel ausgeführt, dass die Signalperiodizität einen wesentlichen Faktor bei der Zellbeeinflussung darstellt, und dass ein stochastisches Signalverhalten für die biologischen Zellen wesentlich günstiger, weil unschädlicher ist. Darüber hinaus sind über ungünstige biologische Einwirkungen von künstlichen Hochfrequenzfeldern der in Rede stehenden Art auf biologische Zellen von Lebewesen, insbesondere Menschen, hinreichende Erkenntnisse verfügbar (Herbert L. König, "Unsichtbare Umwelt; 1986 München).

Eine Aufgabe der vorliegenden Erfindung besteht darin, ein Verfahren zur Hochfrequenz-Signalübertragung zwischen einem Sender und einem Empfänger zu schaffen, das zu einem wesentlich geringeren Elektrostress auf Lebewesen bzw. deren Zellen führt als mit bisherigen Verfahren.

Gelöst wird diese Aufgabe durch die Merkmale des Anspruchs 1. Vorteilhafte Weiterbildungen der Erfindung sind in den Unteransprüchen angegeben.

Demnach ist erfindungsgemäß vorgesehen, dass mit dem HF-Nutzsendesignal ein Signal zur Erzeugung eines natürlichen elektromagnetischen Wechselfelds verknüpft wird, und dass aus den verknüpften Signalen im Empfänger das HF-Nutzsendesignal extrahiert wird. Mit anderen Worten wird erfindungsgemäß das künstliche elektromagnetische Wechselfeld zur Hochfrequenz-Signalübertragung mit einem natürlichen elektromagnetischen Wechselfeld kombiniert, dessen bekannterweise positiven Auswirkungen auf Lebewesen bzw. deren Zellen die Elektrostress hervorrufende Auswirkung des HF-Nutzsendesignals so stark überlagert, dass diese negativen Auswirkungen kompensiert oder zumindest deutlich gemildert und folglich mit körperlich geringerem Stress wahrgenommen werden.

Die Verknüpfung des HF-Nutzsendesignals mit dem natürlichen elektromagnetischen Wechselfeld kann in unterschiedlichster Weise erfolgen. Bevorzugt ist beispielsweise, das HF-Nutzsendesignal mit dem Signal zur Erzeugung eines natürlichen Wechselfelds zu mischen. Alternativ hierzu kann das HF-Nutzsendesignal auf das Signal zur Erzeugung eines natürlichen elektromagnetischen Wechselfelds moduliert werden. Eine weitere Alternative sieht vor, dass das Signal zur Erzeugung eines natürlichen elektromagnetischen Wechselfelds auf das HF-Nutzsendesignal moduliert wird. Alternativ können das HF-Nutzsignal und das natürliche magnetische Wetterfeld auch über mehrere Senderantennen gegebenenfalls getrennt ausgesendet werden. Schließlich kann vorgesehen sein, dass das Signal zur Erzeugung eines natürlichen elektromagnetischen Wechselfelds in Lücken des HF-Nutzsendesignals eingefügt wird. Die im HF-Nutzsendesignal beispielsweise im Falle der GSM-Datenübertragung vorhandenen Lücken sind dabei ausreichend groß, das wesentlich niedrigerfrequente natürliche elektromagnetische Wechselfeld dort einzufügen.

Gemäß einer besonders vorteilhaften Weiterbildung der Erfindung ist vorgesehen, dass das erfindungsgemäß genutzte natürliche elektromagnetische Wechselfeld in etwa einem aktueilen Wetterfeld und bevorzugt einem stressmindernden Schönwetterfeld entspricht. Bevorzugt umfasst das Schönwetterfeld zumindest einen spektralen Zeitverlauf von Sferics, bei den es sich um natürliche luftelektrische Entladungsfelder handelt. Ferner kann das elektromagnetische Wechselfeld, beispielsweise insbesondere das Schönwetterfeld, zumindest ergänzt eine Schumann-Resonanz umfassen, bei der es sich um ein natürliches Magnetfeld handelt.

Zur Definition bzw. Wirkungsweise der vorstehend angesprochenen Sferics und der Schumann-Resonanz wird folgendes angeführt. Bei der sogenannten Schumann-Resonanz handelt es sich um eine sehr niederfrequente Felddisposition. Insbesondere handelt es sich bei der Schumann-Resonanz um ein niederfrequentes Magnetfeld mit einer Frequenz ab 8 Hz. Dieses Magnetfeld ist ein Dauerfeld auf der Erdoberfläche bzw. in der Ionosphäre und steht nicht in Verbindung zum elektrischen Wetterfeld. Bereits im Jahr 1905 wurden durch Nikola Thesla Niederfrequenz-Magnetfeld-Therapiegeräte bereitgestellt, die diese spezielle niederfrequente Felddisposition nutzen. Ein entsprechender Einsatz findet sich diesbezüglich heute erneut bei medizinischen Anwendungen, wie beispielsweise ausgeführt in folgender wissenschaftlicher Literatur: "Unsichtbare Umwelt", Herbert L. König, Eigenverlag, München, 1986.

In den unmittelbar zurückliegenden Jahren wurde die Auswirkung von in der Atmosphäre der Erde existenten elektrischen ULF-Wetterfeldern (ULF steht für Ultralow Frequency) auf Wetterlagen untersucht (siehe beispielsweise H. L. König und Hans Baumer in "Sferics" (Hans Baumer, Rowohlt Verlag Hamburg 1987). Dabei wurde herausgefunden, dass jede spezielle Wettersituation in Abhängigkeit der Zeit ein bestimmtes Feldspektrum dieser Wetterfelder aufweist. Dabei besteht spektral wie zeitlich ein Unterschied zwischen statistischem, synthetisch-/technisch-stochastischem Rauschen und Pseudozufallsfolgen von Sferics-Atmosphären-Aktivitäten bzw. -feldern. Ein Phänomen, welches unter anderem der Auswirkung von Sferics zuzuschreiben ist, ist der beispielsweise in Nähe der Alpen spürbare "Föhn", bei welchem nachweislich die spektrale Zusammensetzung und Intensität der Sferics wetterlagen- und zeitabhängig ausgebildet wird.

Dieses stochastische, natürliche elektrische Wechselfeldsignal in Gestalt von Sferics wird erfindungsgemäß unter anderem gezielt eingesetzt, um den Elektrostress zu kompensieren bzw. zu mindern, der mit einer künstlichen Hochfrequenz-Signalübertragung zwischen einem Sender und einem Empfänger verbunden ist.

Erfindungsgemäß ist ferner vorgesehen, dass zur Optimierung des Abbaus von Elektrostress aufgrund des HF-Nutzsendesignals die Intensität von das Wetterfeld, beispielsweise Schönwetterfeld, festlegenden Signalen eingestellt wird. Alternativ oder ergänzend hierzu kann auch das Niedrigstfrequenzfeld der Schumann-Resonanz zur Optimierung des Abbaus von Elektrostress aufgrund des HF-Nutzsendesignals eingestellt werden.

Ferner ist erfindungsgemäß vorgesehen, dass das jeweilige Wetterfeld durch wetterlagenbezogene Auswahl-Steuerinformation gesteuert wird.

Bevorzugt werden das Wetterfeld festlegende Signale zeitlich begrenzt genutzt und in endlose Signalzüge zusammengesetzt, d.h. randomisiert. Das Spektrum ist damit für später genannte Signal-Empfangszwecke in seiner Zeitstruktur bekannt bzw. erkennbar.

Die Extraktion des HF-Nutzsendesignals im Empfänger kann in unterschiedlicher Weise erfolgen. Vorteilhafterweise ist dabei grundsätzlich vorgesehen, dass das Extrahieren des HF-Nutzsendesignals im Empfänger mittels des Signals zur Erzeugung des natürlichen elektromagnetischen Felds erfolgt, dessen spektraler Zeitverlauf in einem Speicher des Empfängers abgelegt ist.

Bevorzugt erfolgt die Extraktion des HF-Nutzsendesignals aus bekannten Endlos-Wiederholungsspektren von beispielsweise Sferics durch Zeitspektrumserkennung in der jeweiligen Wiederholungsperiode.

Bevorzugt erfolgt ferner die Extraktion des HF-Nutzsendesignals durch digitale Subtraktion des abgespeicherten Signals zur Erzeugung des natürlichen jeweilig ausgewählten elektromagnetischen Felds vom empfangenen Signalspektrum.

Das erfindungsgemäße Verfahren zur Hochfrequenz-Signalübertragung zwischen einem Sender und einem Empfänger kann für unterschiedlichste Einsatzgebiete angewendet werden. Bevorzugt wird das erfindungsgemäße Verfahren zur Telekommunikation, insbesondere für die GSM- bzw. UMTS-Datenübertragung eingesetzt. Ein weiteres bevorzugtes Einsatzgebiet des erfindungsgemäßen Verfahrens ist die analoge und digitale Radar- bzw. Radio-/Fernsehsignalübertragung und die Datenübertragung mit schnurlosem Telefon.

Nachfolgend wird die Erfindung anhand der Zeichnung beispielhaft näher erläutert; in dieser zeigt:
- Fig. 1: schematisch in Blockbilddarstellung eine Anordnung zur Durchführung des erfindungsgemäßen Verfahrens,
- Fig. 2: in Diagrammform der Frequenzverlauf eines typischen Sferics, und
- Fig. 3: ein Diagrammform eine typische Schumann-Resonanz (Niedrigstfrequenzmagnetfeldspektrum)

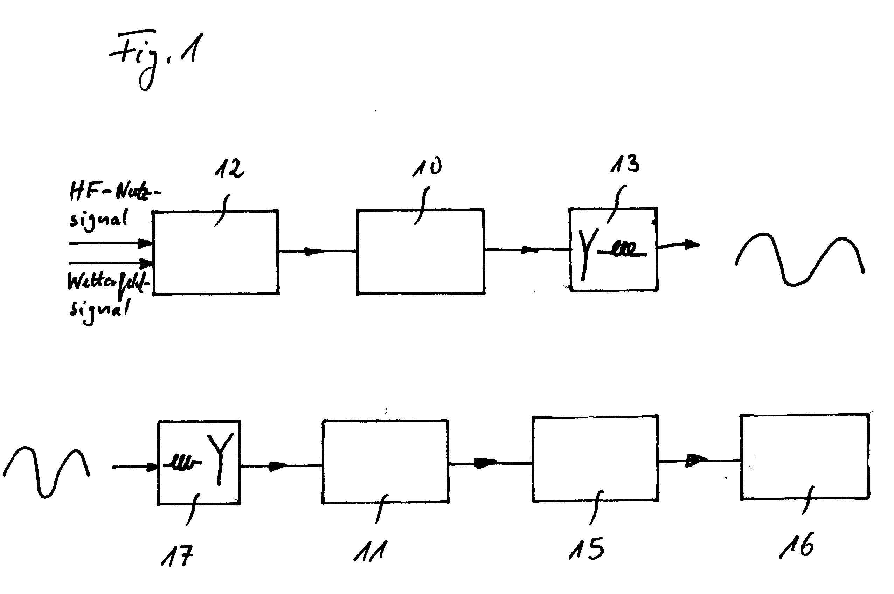

In Fig. 1 ist schematisch eine Ausführungsform einer Anordnung zur Hochfrequenz-Signalübertragung unter Minderung des auf Zellen von Lebewesen einwirkenden Elektrostresses gezeigt.

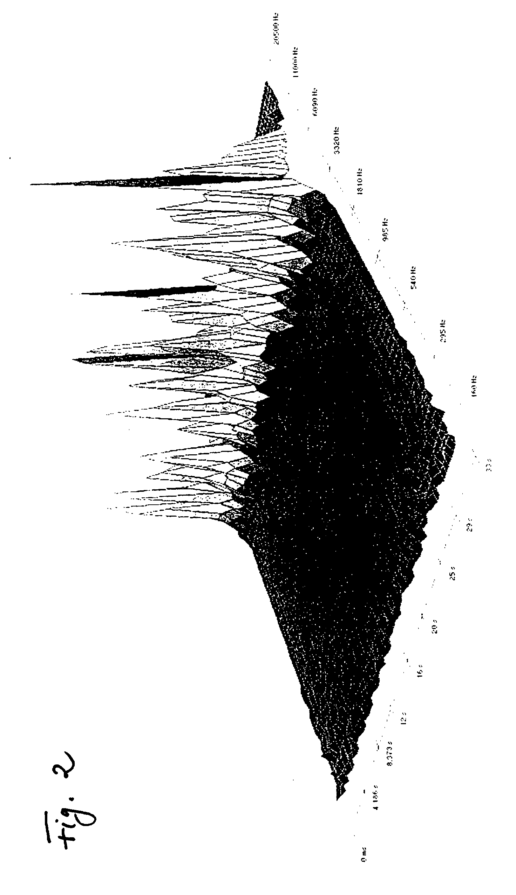

Der Sender ist in Fig. 1 mit der Bezugsziffer 10 bezeichnet und der Empfänger ist in Fig. 1 mit dem Bezugszeichen 11 bezeichnet. Im Sender 10 ist ein Modulator 12 vorgeschaltet, der eingangsseitig mit einem HF-Nutzssignal und einem Signal zur Erzeugung eines Wetterfelds, insbesondere eines Schönwetterfelds (vorliegend Wetterfeldsignal) beaufschlagt wird. Bei dem HF-Nutzsignal handelt es sich beispielsweise um ein GSM-Signal zur Ausstrahlung über den Sender 10 und eine nachfolgend erläuterte Antenne. Das GSM-Signal hat eine Frequenz von typischerweise etwa 0,4 bis 1,8 GHz. Charakteristisch für dieses Signal ist ferner eine Pulsung von mehreren Hundert Hertz. Ein derartiges HF-Nutzsignal führt erwiesenermaßen zu einer Stressbelastung der Zellen insbesondere von Säugetieren bzw. Menschen. Um diesen Elektrostress zumindest zu mildern, wird das HF-Nutzsignal mit einem niedrigfrequenten Wetterfeldsignal, bevorzugt einem Schönwetterfeldsignal im Modulator 12 verknüpft bzw. moduliert, das typischerweise in einem Frequenzbereich zwischen 1000 Hz und 20000 Hz liegt. Ein entsprechendes Wetterfeld in Gestalt eines Schönwetterfelds, bei dem es sich um ein elektromagnetisches Feld handelt, das in der Natur vorkommt und Wetterlagen bezeichnet, ist in Fig. 2 gezeigt. Demnach umfasst z.B. eine Schönwetterfeldsituation die charakteristische spektrale Verteilung von Sferics.

Das Wetterfeldsignal moduliert im Modulator 12 das Nutzsignal, wie vorstehend angeführt. Alternativ hierzu kann das Wetterfeldsignal mit dem HF-Nutzsignal moduliert oder über mehrere parallele Antennenelemente jeweils gesendet werden.

Anstelle des Modulators 12 kann auch eine Schaltung zum Einsatz gelangen, welche das Wetterfeldsignal in anderer Weise mit dem HF-Nutzsignal verknüpft, z.B. in Lücken des HF-Nutzsignals einfügt. Wesentlich für das erfindungsgemäße Verfahren ist, dass mittels des Senders 10 ein wie auch immer geartetes Gemisch aus künstlichem HF-Feld und natürlichem Wetterfeld ausgestrahlt wird.

Das Ausgangssignal des Modulators 12 wird in den Sender 12 eingespeist und über eine Antennenanlage 13 ausgesendet, die zu diesem Zweck ein hierfür geeignetes Antennenelement oder mehrere derartige Elemente umfasst, wie bei 13 mit "Y" dargestellt.

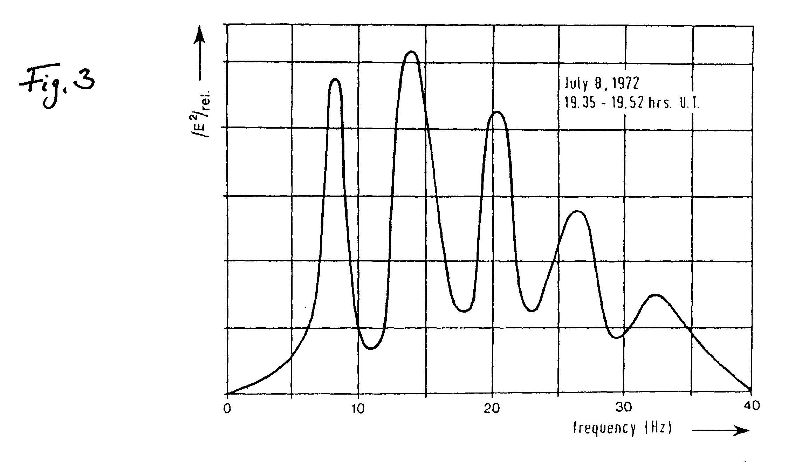

Zusätzlich kann in die Antennenanlage 13 bevorzugt direkt ein Signal entsprechend der sogenannten Schumann-Resonanz eingespeist werden, wie bei 13 mit einem Spulensymbol symbolisch dargestellt. Wie vorstehend erläutert, dient ein Schumann-Resonanzfeld, das von der Antennenanlage 13 mit abgestrahlt wird, und bei dem es sich um ein Magnetfeld handelt, dazu, die Belastungen der Zellen von Lebewesen, insbesondere von Menschen durch das künstlich erzeugte NF-Nutzfeld zu mindern. Insbesondere wirkt nachgewiesenerweise die Schumann-Resonanz entspannend und relaxierend auf Lebewesen. Ein Beispiel einer Schumann-Welle ist in Fig. 3 gezeigt. Insbesondere zeigt Fig. 3 in Diagrammform, wobei die Frequenz auf der X-Achse aufgetragen ist, und wobei das Magnetfeld auf der Y-Achse aufgetragen ist, ein gemischtes Spektrum aus einer über 17 Minuten integrierten sehr konstanten Schwingung im Bereich zwischen ca. 5 Hz und 35 Hz.

Der Vollständigkeit halber sei darauf hingewiesen, dass es sich bei dem Sender 10 beim vorliegenden Beispiel einer GSM-Signalübertragung sowohl um einen Transponder wie um das Sendeteil eines Handys handeln kann.

Dem Empfänger 11 ist ein Demodulator 15 nachgeschaltet, der die inverse Funktion des Modulators 12 erfüllt, d.h., das Gemisch aus HF-Nutzsignal und Wetterfeldsignal extrahiert bzw. entknüpft bzw. demoduliert, so dass am Ausgang des Demodulators das vom Wetterfeldsignal befreitet HF-Nutzsignal zur Verarbeitung in einem Prozessor 16 oder dergleichen vorliegt. Wesentlich ist, dass auf der Strecke zwischen der Antennenanlage 13 und einer entsprechenden, dem Empfänger 11 vorgeschalteten Antennenanlage 17 neben einem Elektrostress verursachenden künstlichen HF-Feld ein Feld zur Neutralisierung dessen Wirkung ein natürliches Wetterfeld mit der Folge herrscht, dass Lebewesen auf der Übertragungsstrecke zwischen Sender und Empfänger zumindest einer deutlich reduzierten Elektrostressbelastung durch das HF-Feld ausgesetzt sind. Bevorzugt ist der Demodulator 15 intelligent ausgebildet und er kennt aus den Signalverläufen der empfangenen Felder, die mit der Antennenanlage 17 empfangen werden, Sferics-Spektren. Folgend auf diese Erkennung vermag der Demodulator 15 den bekannten, periodisiert wiederholten Sferics-Verlauf aus dem empfangenen Signalgemisch zu extrahieren, so dass am Ausgang des Demodulators 15 das HF-Nutzsignal wiedergewonnen vorliegt.

## Patentansprüche

1. Verfahren zur Hochfrequenz-Signalübertragung zwischen einem Sender und einem Empfänger, **dadurch gekennzeichnet, dass** mit dem HF-Nutzsendesignal ein Signal zur Erzeugung eines natürlichen elektromagnetischen Wechselfelds verknüpft wird, und dass aus den verknüpften Signalen im Empfänger das HF-Nutzsendesignal extrahiert wird.

2. Verfahren nach Anspruch 1, **dadurch gekennzeichnet, dass** das HF-Nutzsendesignal mit dem Signal zur Erzeugung eines natürlichen Wechselfelds gemischt wird.

3. Verfahren nach Anspruch 1, **dadurch gekennzeichnet, dass** das HF-Nutzsendesignal auf das Signal zur Erzeugung eines natürlichen elektromagnetischen Wechselfelds moduliert wird.

4. Verfahren nach Anspruch 1, **dadurch gekennzeichnet, dass** das Signal zur Erzeugung eines natürlichen elektromagnetischen Wechselfelds auf das HF-Nutzsendesignal moduliert wird.

5. Verfahren nach Anspruch 1, **dadurch gekennzeichnet, dass** das Signal zur Erzeugung eines natürlichen elektromagnetischen Wechselfelds in Lücken des HF-Nutzsendesignals eingefügt wird.

6. Verfahren nach einem der Ansprüche 1 bis 5, **dadurch gekennzeichnet, dass** das natürliche elektromagnetische Wechselfeld in etwa einem aktuellen Wetterfeld entspricht.

7. Verfahren nach einem der Ansprüche 1 bis 5, **dadurch gekennzeichnet, dass** das elektromagnetische Wechselfeld einem Schönwetterfeld entspricht.

8. Verfahren nach Anspruch 7, **dadurch gekennzeichnet, dass** das Schönwetterfeld zumindest einen spektralen Zeitverlauf von Sferics (elektrische Felder) umfasst.

9. Verfahren nach einem der Ansprüche 6 bis 8, **dadurch gekennzeichnet, dass** die Intensität von das Wetterfeld festlegenden Signalen zur Optimierung des Abbaues von Elektrostress aufgrund des HF-Nutzsendesignals eingestellt wird.

10. Verfahren nach Anspruch 7, 8 oder 9, **dadurch gekennzeichnet, dass** das elektromagnetische Wechselfeld zumindest eine Schumannresonanz (Magnetfeld) umfasst.

11. Verfahren nach Anspruch 10, **dadurch gekennzeichnet, dass** die Intensität der Schumannresonanz zur Optimierung des Abbaues von Elektrostress aufgrund des HF-Nutzsendesignals eingestellt wird.

12. Verfahren nach einem der Ansprüche 6 bis 11, **dadurch gekennzeichnet, dass** das jeweilige Wetterfeld durch wetterlagenbezogene Auswahl-Steuerinformation gesteuert wird.

13. Verfahren nach einem der Ansprüche 6 bis 12, **dadurch gekennzeichnet, dass** das Wetterfeld festlegende Signale zeitlich begrenzt sind und in endlose Signalzüge zusammengesetzt (randomisiert) werden.

14. Verfahren nach einem der Ansprüche 1 bis 9, **dadurch gekennzeichnet, dass** das Extrahieren des HF-Nutzsendesignals im Empfänger mittels des Signals zur Erzeugung des natürlichen elektromagnetischen Felds erfolgt, dessen jeweiliger spektraler Zeitverlauf in einem Speicher des Empfängers abgelegt ist.

15. Verfahren nach Anspruch 14, **dadurch gekennzeichnet, dass** die Extraktion des HF-Nutzsendesignals aus bekannten und jeweils zeitlich erkannten Endlos-Wiederholungsspektren von Sferics durch Zeitspektrumserkennung in der jeweiligen Wiederholungsperiode erfolgt.

16. Verfahren nach Anspruch 14 oder 15, **dadurch gekennzeichnet, dass** die Extraktion des HF-Nutzsendesignals durch digitale Subtraktion des abgespeicherten jeweils geltenden bzw. vorgegebenen oder ausgewählten Signals zur Erzeugung des natürlichen elektromagnetischen Felds vom empfangenen Misch-Signalspektrum erfolgt.

17. Verfahren nach einem der Ansprüche 1 bis 16, **dadurch gekennzeichnet, dass** es zur Telekommunikation, insbesondere für die GSM- bzw. UMTS-Datenübertragung eingesetzt wird.

18. Verfahren nach einem der Ansprüche 1 bis 16, **dadurch gekennzeichnet, dass** es zur analogen und digitalen Radio-/Fernseh-Signalübertragung bzw. Radarübertragung eingesetzt wird.

19. Verfahren nach einem der Ansprüche 1 bis 16, **dadurch gekennzeichnet, dass** es zur Datenübertragung mit schnurlosen Telefonen eingesetzt wird.

20. Verfahren nach einem der Ansprüche 1 bis 19, **dadurch gekennzeichnet, dass** das Signal zur Erzeugung eines natürlichen elektromagnetischen Wechselfelds und gegebenenfalls das Signal zur Erzeugung einer Schumann-Resonanz über hierfür geeignete Antennenelemente, bevorzugt Spulen, senderseitig ausgestrahlt und über entsprechende Antennenelemente empfangsseitig empfangen wird, wobei bevorzugt das Signal zur Erzeugung einer Schumann-Resonanz direkt in ein entsprechendes Antennensendeelement eingespeist wird.
